# EUROPÄISCHE PATENTANMELDUNG

(11) **EP 2 284 710 A1**
(43) Veröffentlichungstag der Anmeldung: **16.02.2011**
(21) Anmeldenummer: 10006931.9
(22) Anmeldetag: 05.07.2010
(51) Int. Cl.: G06F 12/02

(54) **Verfahren zum Verwalten von Speicherressourcen in einem portablen Datenträger**

(30) Priorität: 04.08.2009 DE 102009036095
(71) Anmelder: Giesecke & Devrient GmbH, 81677 München (DE)
(72) Erfinder: Mathé, Werner, 82216 Maisach (DE)

(57) **Zusammenfassung**

Bei einem Verfahren in einem portablen Datenträger (10) zum dynamischen Verwalten von flüchtigen Speicherressourcen (50) des Datenträgers (10) werden die Freispeicherblöcke (310) der Speicherressourcen (50) mittels einer Baumstruktur (100) verwaltet. Mit dem Verwalten der Freispeicherblöcke (310) in Zusammenhang stehende Speicherverwaltungsdaten (152;154;156; 124; 125; 126) werden zumindest teilweise in den Freispeicherblöcken (310) selbst gespeichert.

## Beschreibung

Die vorliegende Erfindung betrifft ein Verfahren zum dynamischen Verwalten von flüchtigen Speicherressourcen in einem portablen Datenträger sowie einen entsprechend eingerichteten Datenträger.

Bei der Speicherverwaltung flüchtiger Speicherressourcen eines portablen Datenträgers ist in besonderem Maße darauf zu achten, dass die bauartbedingt sehr geringen Speicherressourcen optimal ausgenutzt werden. Daneben ist es wichtig, insbesondere im Zusammenhang mit zeitkritischen Applikationen - beispielsweise im Telekommunikationsbereich oder bei Bezahlanwendungen -, Speicheranforderungen schnell zu erfüllen, um den ordnungsgemäßen Ablauf der entsprechenden Applikationen nicht unnötig zu verzögern oder diese gar abzubrechen.

In bekannten Speicherverwaltungssystemen, beispielsweise im Zusammenhang mit PC-Betriebssystemen wie Linux, gelingt es zwar, mittels umfangreicher Verwaltungsstrukturen zum Verwalten von Freispeicherblöcken, wie z.B. so genannten page-descriptor-Tabellen und dergleichen, das Auffinden und Zuteilen verfügbarer Freispeicherblöcke in relativ kurzer Zeit zu ermöglichen. Diese Verwaltungsstrukturen benötigen ihrerseits jedoch selbst erhebliche Speicherressourcen, sodass eine analoge Anwendung entsprechender Techniken im Bereich ressourcenbeschränkter portabler Datenträger nicht sinnvoll erscheint.

Wird auf der anderen Seite auf geeignete Verwaltungsstrukturen verzichtet, so kann ein Auffinden und Zuteilen eines Freispeicherblocks in der Regel nicht in der geforderten Zeit gelingen, da im Allgemeinen bei jeder Anfrage alle zur Verfügung stehenden Freispeicherblöcke betrachtet werden müssen.

In der WO 2005/020078 A2 wird ein Speicherverwaltungsverfahren zum Verwalten von volatilen Speicherressourcen eines portablen Datenträgers beschrieben. Darin wird eine schnelle Zuteilung passender Freispeicherblöcke dadurch erreicht, dass Freispeicherblöcke verschiedener Größen in verschiedenen Bereichen des volatilen Speichers vorgehalten werden. Dadurch wird einer internen Fragmentierung des Speichers entgegengewirkt. Allerdings ist dazu ein erhöhter Verwaltungsaufwand erforderlich, der seinerseits den Speicherbedarf sowie die Zugriffszeiten negativ beeinflusst.

Aufgabe der vorliegenden Erfindung ist es, ein Speicherverwaltungsverfahren vorzuschlagen, welches die verfügbaren Speicherressourcen möglichst optimal ausnutzt und einen schnellen Zugriff auf angeforderten Freispeicher unterstützt.

Diese Aufgabe wird durch eine Verfahren und einen Datenträger mit den Merkmalen der unabhängigen Ansprüche gelöst. Vorteilhafte Ausgestaltungen und Weiterbildungen sind in den abhängigen Ansprüchen angegeben.

Bei einem erfindungsgemäßen Verfahren in einem portablen Datenträger zum dynamischen Verwalten von flüchtigen Speicherressourcen des Datenträgers werden die Freispeicherblöcke der Speicherressourcen mittels einer Baumstruktur verwaltet. Mit dem Verwalten der Freispeicherblöcke in Zusammenhang stehende Speicherverwaltungsdaten werden zumindest teilweise in den Freispeicherblöcken selbst gespeichert.

Entsprechend umfasst ein erfindungsgemäßer Datenträger einen Prozessor und eine auf dem Prozessor ausführbare Speicherverwaltungsapplikation zum dynamischen Verwalten von flüchtigen Speicherressourcen des Datenträgers. Die Speicherverwaltungsapplikation ist dabei eingerichtet, Freispeicherblöcke mittels einer Baumstruktur zu verwalten und mit der Verwaltung der Freispeicherblöcke in Zusammenhang stehende Speicherverwaltungsdaten zumindest teilweise in den Freispeicherblöcken selbst zu speichern.

Das erfindungsgemäße Verwalten der Freispeicherböcke mittels einer Baumstruktur ermöglicht zum einen ein Sortieren der Freispeicherblöcke nach gewünschten Kriterien, insbesondere nach der Größe der Freispeicherblöcke. Auf diese Weise kann ein Auffinden und Zuteilen von Freispeicherblöcken angeforderter Größe schnell erfolgen. Ebenso kann die Baumstruktur ohne großen Aufwand aktualisiert werden, wenn Freispeicherblöcke zugeteilt und wieder freigegeben werden. Das heißt, der Zeitaufwand für die Verwaltung der Freispeicherblöcke wird minimiert.

Zum anderen werden erfindungsgemäß die Speicherressourcen des Datenträgers nahezu optimal ausgenutzt, da Speicherverwaltungsdaten, die im Zusammenhang mit der Verwaltung der Freispeicherblöcke stehen, in den Freispeicherblöcken selbst gespeichert werden - und somit praktisch keinen eigenen Speicherplatz benötigen. Solange ein Freispeicherblock verfügbar ist, d.h. einem auf dem Datenträger ausgeführten Prozess als Freispeicher noch zuteilbar ist, können die Speicherverwaltungsdaten in dem Freispeicherblock gespeichert sein, ohne zuteilbare Speicherressourcen zu verbrauchen. Sobald der Freispeicherblock dann einem Prozess zugeteilt wird, werden die Speicherverwaltungsdaten nicht mehr benötigt und der entsprechende Bereich des zugeteilten Freispeicherblocks, in dem die Speicherverwaltungsdaten gespeichert sind, steht dem Prozess ebenso als Freispeicher zur Verfügung wie der restliche Freispeicherblock.

Im Zusammenhang mit der vorliegenden Erfindung bezeichnen flüchtige Speicherressourcen des Datenträgers insbesondere einen RAM-Arbeitsspeicher des Datenträgers, welcher in der Regel einen als "Heap" bezeichneten Speicherbereich umfasst, welcher dazu dient, dynamische Speicheranforderungen nach Freispeicherblöcken zu bedienen.

Gemäß einer bevorzugten Ausführungsform des erfindungsgemäßen Verfahrens werden die Freispeicherblöcke jeweils verschiedenen Klassen zugeordnet, wobei derselben Klasse zugeordnete Freispeicherblöcke jeweils mittels einer Listenstruktur verwaltet werden. Vorzugsweise werden solche Freispeicherblöcke in einer Klasse zusammengefasst, die im Wesentlichen die gleiche Größe aufweisen. Jeder Knoten der Baumstruktur wird mit genau einer der Klassen verknüpft, indem der Knoten mit der die Freispeicherblöcke der Klasse verwaltenden Listenstruktur verknüpft wird. Auf diese Weise kann die Baumstruktur klein gehalten werden, da nicht für jeden Freispeicherblock, sondern nur für jede Klasse von Freispeicherblöcken, ein Knoten in der Baumstruktur angelegt werden muss. Ein Auffinden eines Freispeicherblocks einer vorgegebenen Größe kann damit noch schneller erfolgen. Dazu wird zuerst derjenige Knoten der Baumstruktur gesucht, welcher mit der Klasse von Freispeicherblöcken verknüpft ist, welche die geforderte Größe aufweisen. Danach wird aus der Listenstruktur, die die entsprechenden Freispeicherblöcke verwaltet, lediglich einer dieser Freispeicherblöcke entnommen. Beinhaltet diese Liste danach noch mindestens ein Element, d.h. einen Freispeicherblock, so kann ein Aktualisieren der Baumstruktur unterbleiben, da lediglich die entsprechende Listenstruktur um ein Element, d.h. um einen Freispeicherblock, verkürzt worden ist. Ein Aktualisieren der Baumstruktur ist allenfalls dann nötig, wenn die Listenstruktur nach dem Zuteilen des Freispeicherblocks - und dem entsprechende Löschen des Freispeicherblocks aus der Listenstruktur - leer ist. Der Knoten der Baumstruktur, der mit dieser dann leeren Klasse verknüpft ist, wird dann aus der Baumstruktur entfernt.

Prinzipiell kann eine Klasse von Freispeicherblöcken auch mit einer von einer Liste verschiedenen Datenstruktur verwaltet werden, welche dann ihrerseits in geeigneter Weise mit dem entsprechenden Knoten in der Baumstruktur verknüpft wird. Eine solche andere Datenstruktur kann z.B. dann sinnvoll eingesetzt werden, wenn es beabsichtigt ist, dass die Freispeicherblöcke innerhalb der Klasse selbst nochmals - nach einem weiteren Kriterium, beispielsweise nach ihrer physikalischen Speicheradresse, ihrer letzen Zugriffszeit oder dergleichen - sortiert werden sollen. Auf diese Weise kann die Speicherverwaltung beispielsweise hinsichtlich Lokalität der Speichervergabe optimiert werden. Dazu bieten sich als Datenstrukturen beispielsweise ein Heap (nicht zu verwechseln mit dem oben genannten "Heap" als Bereich der flüchtigen Speicherressourcen) an, welcher prinzipiell ebenfalls baumartig aufgebaut ist, oder eben eine weitere Baumdatenstruktur. Auf der anderen Seite ist es ebenfalls möglich, auf die beschriebene zweistufige Verwaltung der Freispeicherblöcke dadurch zu verzichten, dass sämtliche Freispeicherblöcke durch die Baumstruktur alleine verwalten werden, dass also auf die Bildung von Klassen gleichartiger Freispeicherblöcke verzichtet wird. Eine solche Ausführungsform erscheint sinnvoll, wenn Freispeicherblöcke sehr vieler verschiedener Größen verwaltet werden sollen.

In einer bevorzugten Ausführungsform des Verfahrens werden die Klassen von Freispeicherblöcken aber, wie erwähnt, mittels einer Listenstruktur verwaltet. Diese unterstützt alle erforderlichen Operationen auf der zu verwalteten Menge von Freispeicherblöcken, im Wesentlichen sind dies lediglich das Einfügen und das Löschen eines Elements in bzw. aus der Listenstruktur, in optimaler Zeit und mit minimalem Verwaltungsaufwand. Da die Freispeicherblöcke einer Klasse vorzugsweise etwa dieselbe Größe aufweisen, kann eine Speicheranforderung nach Freispeicher in dieser Größe mittels jedes beliebigen dieser Freispeicherblöcke bedient werden, weswegen die oben angesprochene weitere Sortierung der Freispeicherblöcke, etwa nach vorstehend genannten Kriterien, grundsätzlich nicht notwendig ist.

Die Listenstruktur kann als doppelt verkettete Listenstruktur ausgebildet sein. Auf diese Weise kann ein Einfügen oder Löschen eines Elements in die bzw. aus der Liste an einer beliebigen Stelle der Listenstruktur einfacher durchgeführt werden. In einer doppelt verketteten Liste, welche - wie jede Liste - über ein ausgezeichnetes Startelement betreten wird, besitzt jedes Element jeweils eine Referenz auf seinen Vorgänger bzw. Nachfolger in der Liste, wobei das Startelement keinen Vorgänger und das letzte Element keinen Nachfolger besitzt. Dies kann beispielsweise durch jeweils eine Referenz auf eine vorgegebene Adresse (NULL-Zeiger) dargestellt werden. Eine solche Listenstruktur kann also sowohl vorwärts, entlang der Nachfolger-Referenzen, als auch rückwärts, entlang der Vorgänger-Referenzen, durchlaufen werden. Bei einer einfach verketteten Listenstruktur, die gleichfalls einsetzbar ist, fehlen die Vorgänger-Referenzen.

In einem Freispeicherblock können als Speicherverwaltungsdaten zur Verwaltung der Freispeicherblöcke mittels der Baumstruktur Referenzen auf Nachbarknoten in der Baumstruktur, also auf den Elternknoten und die ein oder mehreren Kinderknoten, gespeichert werden. Eine - wie im vorliegenden Fall - als Suchdatenstruktur eingesetzte Baumdatenstruktur besitzt einen ausgezeichneten Knoten, die so genannte Wurzel, welche als Einstiegsknoten in die Baumstruktur dient. Die direkten Nachbarknoten der Wurzel, welche mit der Wurzel also über eine Referenz verbunden sind, bilden die so genannten Kinderknoten der Wurzel und betrachten die Wurzel wiederum jeweils als ihren Elternknoten. Die Wurzel selbst hat keinen Elternknoten. Jeder dieser Kinderknoten kann selbst Kinderknoten besitzen.

Zur zusätzlichen Verwaltung der Freispeicherblöcke innerhalb einer Klasse von Freispeicherblöcken mittels der Listenstruktur werden als Speicherverwaltungsdaten in den Freispeicherblöcken Referenzen auf einen Vorgänger und/oder Nachfolger in der Listenstruktur gespeichert.

Vorzugsweise werden lediglich in einem Freispeicherblock einer die Freispeicherblöcke einer Klasse verwaltenden Listenstruktur Speicherverwaltungsdaten bezüglich der Baumstruktur, also Referenzen auf Nachbarknoten in der Baumstruktur, gespeichert. Dieser Freispeicherblock stellt in der Regel gleichzeitig das Startelement der die Klasse verwaltenden Listenstruktur dar, über welches, entlang der Nachfolger-Referenz bezüglich der Listenstruktur, dann die restlichen Freispeicherblöcke der Listenstruktur adressiert werden können, ohne dass diese selbst Referenzen auf die Baumstruktur speichern müssten. Auf diese Weise kann die Baumstruktur bezüglich der Anzahl der Knoten der Baumstruktur klein gehalten werden, wodurch die Suchzeiten und der Aufwand für eine eventuell notwendige Aktualisierung der Baumstruktur ebenfalls gering bleibt. Such- und Aktualisierungszeiten hängen bei solchen Baumstrukturen im Wesentlichen vom längsten Weg in der Baumstruktur (von der Wurzel zu einem Knoten ohne Kinderknoten, einem so genannten Blatt) ab. In den verwendeten Baumstrukturen besitzt ein solcher Weg nicht etwa eine linear wachsende Länge (abhängig von der Anzahl der Knoten der Baumstruktur) - wie dies z.B. bei Listen der Fall ist - sondern allenfalls eine logarithmisch wachsende Länge.

Um den Aufwand für das Auffinden von bestimmten Knoten in der Baumstruktur sowie den Aufwand für das Einfügen und Löschen von Knoten in bzw. aus der Baumstruktur zu minimieren, werden balancierte Baumstrukturen bevorzugt verwendet, insbesondere binäre balancierte Bäume. Ein Baum heißt binär, wenn jeder Knoten höchstens zwei Kinderknoten besitzt. Ein Baum heißt balanciert, wenn die Tiefe des Baumes, also die Länge des längsten Weges von der Wurzel zu einem Blatt, lediglich logarithmisch mit der Anzahl der Knoten des Baumes wächst. Eine solche Bedingung kann auf verschiedene, bekannte Weisen erreicht werden.

Besonders bevorzugt werden so genannte selbstbalancierende Bäume verwendet. Diese haben die Eigenschaft, dass die Baumstruktur stets, d.h. vor und nach Anwendung einer der genannten Operationen Auffinden, Einsetzen oder Löschen eines Elements, balanciert ist bzw. bleibt. Bekannte Vertreter dieser Klasse von Baumstrukturen sind beispielsweise AVL-Bäume, Rot-Schwarz-Bäume oder Splay-Bäume, wobei die Balanciertheitsbedingung jeweils auf andere Weise sichergestellt wird. Während Splay-Bäume einfach und Platz sparend implementierbar sind, liefern AVL-Bäume oder Rot-Schwarz-Bäume, z.B. bei in etwa gleichverteiltem Zugriff auf die Elemente der Baumstruktur, empirisch einen etwas geringeren Zugriffs- bzw. Aktualisierungsaufwand, benötigen dazu aber einen höheren Implementationsaufwand und einen größeren Speicherbedarf.

Vorzugsweise wird ein Freispeicherblock zur einfacheren Verwaltung mittels einer Anfangs- und einer Endmarkierung definiert, welche den Freispeicherblock begrenzen, nicht aber selbst Teil des Freispeicherblocks sind. Eine solche Anfangs- und Endmarkierung kann Informationen über die Größe des Freispeicherblocks und über seine Verfügbarkeit umfassen, d.h. darüber, ob der Freispeicherblock noch zuteilbar ist oder nicht. Die Information über die Größe des Freispeicherblocks kann auch als einem Knoten der Baumstruktur zugeteilter, so genannter Suchschlüssel verwendet werden, anhand dessen in der Baumstruktur, dessen Knoten ja Klassen von Freispeicherblöcken repräsentieren, Knoten mit gegebenem Suchschlüsselwert gesucht werden. Die Markierungen dienen weiterhin dazu, einfach zu erkennen, ob direkt aneinander angrenzende verfügbare Freispeicherblöcke zu einem neuen, größeren Freispeicherblock verschmolzen werden können.

Gemäß einer bevorzugten Ausführungsform werden Freispeicherblöcke, welche eine gewisse Größe unterschreiten, mittels einer von der Baumstruktur verschiedenen Verwaltungsstruktur verwaltet. Dies betrifft insbesondere solche Freispeicherblöcke, die nicht groß genug sind, um die vorgenannten Speicherverwaltungsdaten in ihrer Gesamtheit, also die Referenzen auf die Nachbarknoten in der Baumstruktur zusammen mit den Referenzen für die Listenstruktur, zu speichern. Solche Freispeicherblöcke können aber speziellen Sonderklassen zugeteilt werden und beispielsweise mittels einfach oder doppelt verketteter Listen verwaltet werden. Dafür sind kaum Speicherverwaltungsdaten erforderlich. Im Falle einer einfach verketteten Liste ist lediglich eine Referenz auf einen Nachfolger in der Listenstruktur nötig. Im Falle einer doppelt verketteten Liste ist zusätzlich eine Referenz auf einen Vorgänger in der Listenstruktur nötig. Freispeicherblöcke, die zu klein sind, eine solche Referenz zu speichern, sind auch als zuteilbare Freispeicherblöcke im Wesentlichen wertlos, da kaum ein Prozess Freispeicher anfordert, der zu klein ist, um darin auch nur eine Referenz zu speichern.

Wie vorstehend bereits angedeutet, wird beim Zuteilen eines Freispeicherblocks als Freispeicher an einen auf dem Datenträger laufenden Prozess der gesamte Freispeicherblock einschließlich eines von den Speicherverwaltungsdaten belegten Bereichs des Freispeicherblocks - und, falls vorhanden, ausschließlich der Anfangs- und Endmarkierungen - dem Prozess als Freispeicher zur Verfügung gestellt. Die Speicherverwaltungsdaten belegen also stets nur solche Bereiche der Speicherressourcen, die noch nicht angefordert worden sind und beeinträchtigen die Speichervergabe niemals dahingehend, dass sie Speicherbereiche einnehmen, die deswegen nicht zugeteilt werden können.

Die Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen Datenträgers;
- Figur 2: eine schematische Darstellung einer bevorzugten Ausführungs- form einer Baumstruktur zur Verwaltung von Freispeicher- blöcken, wobei jeder Knoten der Baumstruktur mit einer Li- stenstruktur zur Verwaltung einer Klasse von Freispeicher- blöcken verknüpft ist;
- Figur 3: eine einfach verkettete Listenstruktur zur Verwaltung einer speziellen Sonderklasse von Freispeicherblöcken; und
- Figur 4: eine schematische Darstellung von Ausschnitten eines flüchti- gen Speichers des Datenträgers aus Fig. 1, wobei der Speicher mittels der Datenstrukturen aus den Fig. 2 und 3 verwaltet wird.

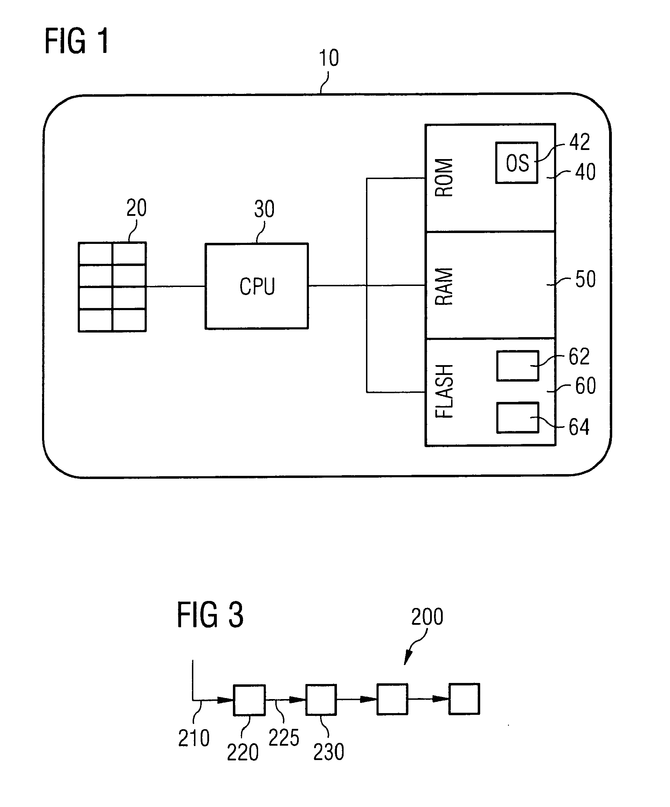

Mit Bezug auf Fig. 1 umfasst ein portabler Datenträger 10, der hier als Chipkarte dargestellt ist, eine Datenkommunikationsschnittstelle 20, einen Prozessor (CPU) 30 sowie verschiedene Speicher 40, 50, 60. Der Datenträger 10 kann dabei auch in einer anderen Bauform ausgebildet sein.

Die Datenkommunikationsschnittstelle 20 ist als Kontaktfeld gemäß ISO 7816 ausgebildet. Alternativ oder zusätzlich kann der Datenträger 10 auch über eine Datenkommunikationsschnittstelle zur kontaktlosen Datenkommunikation, z.B. eine Antenne (nicht gezeigt), verfügen. Ebenfalls möglich sind andere oder weitere (nicht gezeigte) kontaktbehaftete Schnittstellen, beispielsweise eine USB-Schnittstelle oder dergleichen. Es ist auch möglich, dass der Datenträger 10 keine Schnittstelle zur externen Datenkommunikation besitzt, wenn er beispielsweise als Generator für Einmalpasswörter oder dergleichen vorgesehen ist.

Ein nicht flüchtiger, nicht wiederbeschreibbarer ROM-Speicher 40 umfasst ein Betriebssystem (OS) 42, welches den Datenträger 10 steuert. Anteile des Betriebssystems 42 können auch in dem nicht flüchtigen, wiederbeschreibbaren FLASH-Speicher 60, welcher auch als EEPROM-Speicher ausgebildet sein kann, gespeichert sein. Der Speicher 60 umfasst eine Speicherverwaltungsapplikation 62, welcher ihrerseits auch in dem ROM-Speicher 40, beispielsweise als Teil des Betriebssystems 42, gespeichert sein kann. Weiterhin dient der Speicher 60 zum Speichern von beliebigen Applikationen 64, die je nach Anwendungsgebiet des Datenträgers 10 variieren können.

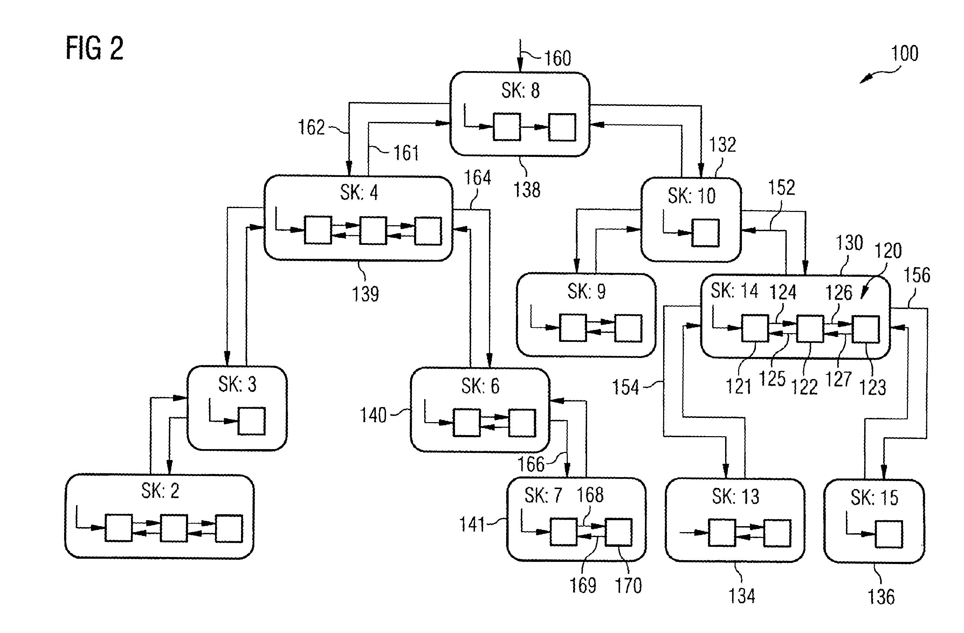

Die Speicherverwaltungsapplikation 62 dient zum Verwalten des flüchtigen RAM-Speichers 50, wie es mit Bezug auf die Fig. 2 bis 4 nachstehend detailliert beschrieben wird.

Der Datenträger 10 kann zum Betrieb über die Datenkommunikationsschnittstelle 20 oder auch eine nicht gezeigte Antennenspule zur kontaktlosen Datenkommunikation mit Energie versorgt werden. Alternativ oder zusätzlich kann eine eigene Energieversorgung, beispielsweise eine Batterie (nicht gezeigt), vorgesehen sein.

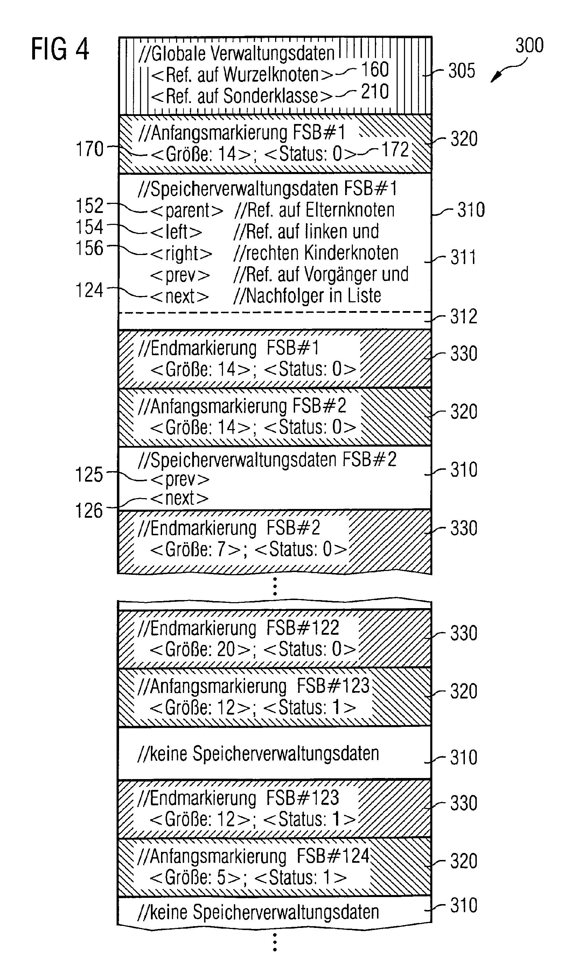

Mit Bezug auf die Figuren 2 bis 4 wird im Folgenden ein Verfahren zum Verwalten von Freispeicherblöcken 310 eines Heaps 300 (Fig. 4), welcher Teil des flüchtigen Speichers 50 des Datenträgers 10 ist, beschrieben. Dabei zeigt Fig. 2 eine Baumdatenstruktur 100, die zum Verwalten von Freispeicherblöcken 310 verwendet wird. In Fig. 3 ist eine einfach verkettete Liste 200 dargestellt, die zur weiteren Verwaltung einer Sonderklasse von speziellen Freispeicherblöcken genutzt wird, welche nicht mittels der Baumstruktur 100 verwaltet werden. Fig. 4 schließlich stellt schematisch eine Aufteilung des dem Heap 300 zugeteilten Speicherbereichs in dem Speicher 50 dar.

Der Heap 300 (Fig. 4) ist in verschiedene, konsekutive Blöcke eingeteilt, beginnend mit einem Initialisierungsblock 305, der globale Verwaltungsdatendaten umfasst, die im Folgenden mit Bezug auf Figur 2 detailliert besprochen werden.

Es folgt eine erste Gruppe von Blöcken 320, 310, 330, welche einem ersten Freispeicherblock (FSB #1) 310 zugeordnet sind. Dabei dienen die Blöcke 320 und 330 als Anfangs- 320 und Endmarkierung 330 für den Freispeicherblock 310, gehören diesem selbst aber nicht an. Sie enthalten Informationen über die Größe 170 und den Verfügbarkeitsstatus 172 des entsprechenden Freispeicherblocks 310. Die Größenangaben sind lediglich symbolischer Natur, beispielsweise bedeutet die Größenangabe "14" 170 eine Speichergröße von 14*4 Byte. Der Verfügbarkeitsstatus 172 gibt an, z.B. mittels eines einzelnen Bits, ob der entsprechende Freispeicherblock 310 für die Speicherverwaltungsapplikation 62 zum Zuteilen an einen auf dem Prozessor 30 des Datenträgers 10 laufenden Prozess noch verfügbar ist (Status: 0) oder ob der Freispeicherblock 310 bereits einem Prozess zugeteilt worden ist (Status: 1). Größenangabe 170 und Verfügbarkeitsstatus 172 können also sehr kompakt gespeichert werden, sodass die Markierungen 320, 330 nur wenig Speicherressourcen benötigen. Die Markierungsblöcke 320, 330 können bei Bedarf weitere Informationen über den Freispeicherblock 310 umfassen.

Die in Figur 4 gezeigten Erläuterungen in den mit den Kommentarzeichen "//" angedeuteten Kommentaren dienen nur der Beschreibung der Erfindung und benötigen keinen Speicherplatz, da sie im Speicher nicht kodiert sind.

Der Block 310 des ersten Freispeicherblocks (FSB #1) speichert Speicherverwaltungsdaten 152, 154, 156, 124 in einem Teilbereich 311 des Freispeicherblocks 310, welche mit Bezug auf Fig. 2 nachstehend detailliert erläutert werden, und die zur Verwaltung des Freispeicherblocks 310 FSB #1 und eventuell weiterer Freispeicherblöcke gleicher Größe, z.B. des Freispeicherblocks 310 FSB #2, dienen, der sich, analog strukturiert und durch Markierungen 320, 330 definiert und begrenzt, an die dem Freispeicherblock 310 FSB #1 zugeordneten Blöcke anschließt. Da der Freispeicherblock 310 FSB #1 verfügbar ist - sein Status ist 0 - können die Speicherverwaltungsdaten 152, 154, 156, 124 in dem Bereich 311 gespeichert sein, ohne dort benötigte flüchtige Speicherressourcen des Datenträger 10 zu vergeuden. Bereits zugeteilte Freispeicherblöcke, beispielsweise der Freispeicherblock FSB #123 (siehe unteres Ende des Heaps 300) umfasst keine Speicherverwaltungsdaten mehr, sondern steht dem Prozess, dem er durch die Speicherverwaltungsapplikation 62 zugeteilt worden ist, in voller Größe zur Verfügung.

In gleicher Weise - in Fig. 4 lediglich schematisch dargestellt - schließen sich im Heap 300 angrenzend an die Endmarkierung 330 des Freispeicherblocks FSB #2 weitere Gruppen von Blöcken 320, 310, 330 an, welche weiteren, noch verfügbaren oder bereits zugeteilten Freispeicherblöcken 310 zugeordnet sind. Der Heap 300 selbst kann ebenfalls - in Figur 4 nicht gezeigte - Anfangs- und Endmarkierungen besitzen, welche beispielsweise eine Angabe über die Größe des Heaps 300 umfassen. Die Anfangsmarkierung kann sich direkt an den Block 305 anschließen, die Endmarkierung den Heap 300 abschließen.

Mit Bezug auf die Figuren 2 und 3 wird nun erläutert, wie die Freispeicherblöcke 310 des Heaps 300 durch die Speicherverwaltungsapplikation 62 mittels der Baumstruktur 100 verwaltet werden.

Die Baumstruktur 100 umfasst eine Menge von Knoten, beispielsweise die Knoten 130,132,134,136, welche über Referenzen, z.B. die Referenzen 152, 154,156, miteinander verbunden sind. Der Knoten 138, über den die Baumstruktur 100 über die Referenz 160 adressierbar ist, stellt die so genannte Wurzel der Baumstruktur 100 dar. Ein Weg in der Baumstruktur 100 verläuft von einem Knoten, z.B. der Wurzel 138, über eine Referenz zu einem so genannten Kinderknoten des Knotens, z.B. über die Referenz 162 zu dem linken Kinderknoten 139, und eventuell in entsprechender Weise weiter, also z.B. über die Referenzen 164 und 166 über den Knoten 140 zum Knoten 141, einem so genannten Blatt der Baumstruktur 100, also einem Knoten ohne weitere Kinderknoten. Die Länge eines längsten solchen Weges in der Baumstruktur 100 zwischen der Wurzel 138 und einem Blatt bezeichnet die so genannte Tiefe der Baumstruktur 100. Im Zusammenhang mit der vorliegenden Erfindung verwendete Baumstrukturen 100 zeichnen sich dadurch aus, dass sie balanciert sind, d.h. dass die Tiefe der Baumstruktur 100 immer möglichst gering ist. Genauer bedeutet dies, dass die Tiefe stets lediglich logarithmisch mit der Anzahl der Knoten der Baumstruktur 100 wächst. Bekannte Vertreter dieser Klasse von Baumstrukturen sind beispielsweise AVL-Bäume, Rot-Schwarz-Bäume oder Splay-Bäume, welche stets binäre Bäume sind.

Im gezeigten Beispiel besitzt jeder Knoten der Baumstruktur 100 einen Elternknoten (außer der Wurzel 138) und höchstens zwei Kinderknoten (binäre Baumstruktur). Der Knoten 130 z.B. besitzt den linken Kinderknoten 134 (über die Referenz 154), den rechten Kinderknoten 136 (über die Referenz 156) sowie den Elternknoten 132 (über die Referenz 152). Alternativ könnten auch Baumstrukturen eingesetzt werden, welche mehr als zwei Kinderknoten zulassen.

Jeder Knoten der Baumstruktur 100 ist mit einem Suchschlüssel SK versehen. Dieser Suchschlüssel SK repräsentiert im vorliegenden Beispiel die Größe 170 eines Freispeicherblocks 310. Freispeicherblöcke 310 derselben Größe 170 werden zu einer Klasse zusammengefasst, die dann mittels einer Listenstruktur verwaltet werden. Somit entspricht jeder Knoten der Baumstruktur 100 einer Klasse von Freispeicherblöcken 310 gleicher Größe 170, wobei die Freispeicherblöcke 310 innerhalb einer Klasse mittels einer Listenstruktur 120, welche mit dem entsprechenden Knoten 130 der Baumstruktur 100 verknüpft ist, verwaltet werden, d.h. jedes Listenelement entspricht genau einem Freispeicherblock 310. Die Listenstruktur 120, welche mit dem Knoten 130 verknüpft ist, stellt eine doppelt verkettete Liste mit dem Startelement 121 und den weiteren Elementen 122 und 123 dar, welche jeweils mittels der Referenzen 124, 125 und 126, 127 doppelt verkettet sind. Es ist auch möglich, dass eine Klasse eine Menge von Freispeicherblöcken 310 umfasst, deren Größe innerhalb eines vorgegebenen Größenintervalls liegen, die also lediglich in etwa die gleiche Größe aufweisen.

Jedes Element 121,122,123 der Liste 120 stellt einen konkreten, verfügbaren Freispeicherblock 310 der Größe "14" (vgl. den Suchschlüssel SK: 14 des Knoten 130) dar. Entsprechendes gilt für die anderen Knoten der Baumstruktur 100, beispielsweise stellt das Element 170 der mit dem Knoten 141 verknüpften Listenstruktur einen von zwei mittels dieser Listenstruktur verwalteten Freispeicherblock 310 der Größe "7" dar. Es ist zu bemerken, dass mittels der Baumstruktur 100 und der mit den Knoten derselben verknüpften Listenstrukturen lediglich verfügbare Freispeicherblöcke verwalten werden, nicht aber bereits zugeteilte Freispeicherblöcke (vgl. Fig. 4, FSB #123).

Wie es von binären Suchbäumen bekannt ist, sind die Suchschlüssel SK in der Baumstruktur 100 derart angeordnet, dass eine Suche nach einem Knoten mit einem entsprechenden Suchschlüssel effektiv durchgeführt werden kann. Für jeden Knoten der Baumstruktur 100 gilt, dass die Suchschlüssel SK der Knoten im linken Ast stets kleiner, die Suchschlüssel SK im rechten Ast stets größer sind als der eigene Suchschlüssel SK. Für eine Suche nach einem Knoten mit einem Suchschlüssel SK vorgegebenen Wertes muss also lediglich die Baumstruktur 100 von der Wurzel 138 entlang eines Weges in Richtung eines Blattes durchlaufen werden, wobei an jedem Knoten des Weges geprüft wird, ob der Suchschlüssel SK des Knotens größer, kleiner oder identisch mit dem vorgegebenen Wert ist. Wenn die Speicherverwaltungsapplikation 62 beispielsweise eine Anforderung nach einem Freispeicherblock 310 der Größe "7" zu bedienen hat, greift sie über die Referenz 160 auf den Wurzelknoten 138 der Baumstruktur 100 zu und vergleicht den Wert "7" mit dem Suchschlüssel SK der Wurzel. Dieser beträgt "8", größer als "7". Somit folgt die Speicherverwaltungsapplikation 62 der Referenz 162 zum linken Kinderknoten 139. Dessen Suchschlüssel SK beträgt weniger als "7", nämlich "4", weswegen der Suchweg im rechten Ast des Knotens 139 über die Referenz 164 fortgesetzt wird zum Knoten 140 und schließlich über die Referenz 166 zum Knoten 141, da der Wert "7" größer ist als der Suchschlüssel SK ("6") des Knotens 140. Die Listenstruktur, die mit dem Knoten 140 verknüpft ist, verwaltet zwei Freispeicherblöcke 310 der Größe "7", von denen die Speicherverwaltungsapplikation 62 nun einen zuteilen kann und danach aus der Listenstruktur löscht.

Falls eine Listenstruktur 120 noch mehr als ein Element umfasst, wird beim Zuteilen eines Freispeicherblocks 310 vorzugsweise derjenige Freispeicherblock 310 zugeteilt, der dem zweiten Listenelement 122 entspricht. Die Aktualisierung der Listenstruktur 120 beschränkt sich dann auf das Aktualisieren der Referenzen 124,127 der beiden Nachbarelemente 121,123. Die Baumstruktur 100 muss nicht angepasst werden, da, wie nachstehend genau beschrieben, ein Freispeicherblock 310, der nicht einem Startelement 121 einer Listenstruktur 120 entspricht (z.B. Freispeicherblock 310 zu FSB #2 in Fig. 4), keine Speicherverwaltungsdaten bezüglich der Baumstruktur 100 speichert.

Wird ein zugeteilter Freispeicherblock 310 von einem Prozess wieder an die Speicherverwaltungsapplikation 62 zurückgegeben, so kann zunächst untersucht werden, ob die im Heap 300 zu dem freigegebenen Freispeicherblock 310 benachbarte Freispeicherblöcke 310 verfügbar sind. Ist dies der Fall, können diese dann mit dem freigegebenen Freispeicherblock 310 zu einem größeren verfügbaren Freispeicherblock verschmolzen werden, müssen dann allerdings aus diese Freispeicherblöcke 310 bisher verwaltenden Listenstrukturen entfernt werden. Dies ist bei doppelt verketteten Listenstrukturen besonders einfach, da lediglich die Nachfolger- bzw. Vorgänger-Referenzen der Vorgänger bzw. Nachfolger in der Listenstruktur, auf die aufgrund der doppelten Verkettung direkter Zugriff besteht, angepasst werden müssen.

Danach wird der durch die vorstehende Verschmelzung entstandene größere bzw. der ursprünglich freigegebene Freispeicherblock 310 (falls keine Verschmelzung möglich war) in die Baumstruktur 100 bzw. eine Listenstruktur 120 integriert. Existiert bereits bzw. noch eine Klasse (also ein Knoten in der Baumstruktur 100) der entsprechenden Größe 170, so wird ein dem Freispeicherblock 310 entsprechendes neues Listenelement in die mit dem Knoten verknüpfte Listenstruktur eingefügt, vorzugsweise wieder an der zweiten Stelle. Eine solche Operation kann mit konstant vielen Referenzanpassungen durchgeführt werden (auch wenn die Listenstruktur nur einfach verkettet wäre). Falls keine Klasse der entsprechenden Größe existiert, muss ein neuer Knoten der Baumstruktur 100 angelegt werden und geeignet in die Baumstruktur 100 eingefügt werden. Dies benötigt, genauso wie das Suchen eines Knotens, lediglich logarithmisch viele Schritte. Dieser Knoten wird dann mit einer ein-elementigen Listenstruktur verknüpft, welche den freigegebenen Freispeicherblock repräsentiert.

Das mit Bezug auf Fig. 2 dargestellte Konzept der Verwaltung der Freispeicherblöcke 310 mittels der Baumstruktur 100 und den angeschlossenen Listenstrukturen 120 kann, wie mit Bezug auf Fig. 4 bereits teilweise erläutert, außerordentlich Platz sparend und effektiv implementiert werden. Sämtliche Speicherverwaltungsdaten, die die Baumstruktur 100 und die Listenstrukturen 120 betreffen, sind in den Freispeicherblöcken 310 des Heaps 300 selbst gespeichert. Lediglich die Referenz 160 auf die Wurzel 138 der Baumstruktur 100 ist im Block 305 gespeichert, die Suchschlüssel SK sind mittels der Größeninformation 170 in der Anfangs- 320 und Endmarkierungen 330 gespeichert. Zur Verwaltung der Baumstruktur 100 sind lediglich die Referenzen auf die Nachbarknoten eines Knotens notwendig. Zur Verwaltung der Listenstrukturen genügen die Referenzen auf Vorgänger und Nachfolger in der jeweiligen Listenstruktur. Jeweils derjenige Freispeicherblock 310 einer Klasse von Freispeicherblöcken 310 der gleichen Größe, der dem ersten Listenelement entspricht, umfasst dabei jeweils die Speicherverwaltungsinformation zu dem entsprechenden Knoten der Baumstruktur 100, welcher dieser Klasse zugeordnet ist, sowie die Referenzen des ersten Listenelements der mit dem Knoten verknüpften Listenstruktur.

Ein entsprechendes Beispiel ist mit Bezug auf den ersten Freispeicheblock 310 (FSB #1) in Fig. 4 gezeigt (vgl. dazu Knoten 130 in Fig. 2). Die Speicherverwaltungsdaten umfassen Referenzen 152 auf den Elternknoten 132 sowie Referenzen 154, 156 auf den linken 134 und rechten 136 Kinderknoten. Betrachtet als erstes Listenelement 121 der Liste 120 ist die Referenz auf den Vorgänger nicht bezeichnet, da das erste Listenelement 121 keinen Vorgänger besitzt. Eine Referenz auf den NULL-Zeiger könnte dies andeuten. Die Referenz 124 zeigt auf das nächste Listenelement 122. Dieses Listenelement (aus Fig. 2) entspricht dem zweiten Freispeicherblock (FSB #2) in Fig. 4. Da dieser nun nicht einem ersten Listenelement einer Listenstruktur entspricht, umfassen die Speicherverwaltungsdaten dieses Freispeicherblocks 310 lediglich Speicherverwaltungsdaten bezüglich der Listenstruktur 120, nämlich die Referenzen 125,126 auf den Vorgänger 121 und den Nachfolger 123.

Freispeicherblöcke, die zu klein sind, als dass sie die vorstehend beschriebenen Speicherverwaltungsdaten speichern könnten, werden mittels einer separaten einfach verketteten Listenstruktur 200, die in Fig. 3 angedeutet ist, verwaltet, auf welche über die Referenz 210 (vgl. Block 305 des Heaps 300 in Fig. 4) zugegriffen werden kann. D.h. diese spezielle Sonderklasse von Freispeicherblöcken wird außerhalb der Baumstruktur 100 verwaltet. Als Speicherverwaltungsdaten sind, beispielsweise für das Element 220, jeweils nur eine Referenz 225 auf den Nachfolger 230 in der Liste 200 zu speichern. Andere Datenstrukturen, beispielsweise ein Array, sind ebenfalls anstatt der Listenstruktur 200 einsetzbar. Je nach Anwendungszusammenhang können auch mehrere solcher Sonderklassen, eventuell nochmals nach Größe unterschieden, vorgesehen sein.

Bevorzugt werden auch für die Sonderklassen doppelt verkettete Listen verwendet. Der Aufwand für eine Sonderbehandlung kurzer Einträge in den Listen wäre größer, als der Aufwand für die Verwaltung der Vorgänger-Referenzen. Die doppelte Verkettung der Listenstruktur führt insbesondere bei Vereinigung eines freien Speicherblocks (bei dem kein Pfad, sondern nur dessen Referenz bekannt ist) zu einem meist konstantem Aufwand. Eine einfache Verkettung würde es dagegen nötig machen, in diesem Fall die gesamte Liste durchsuchen zu müssen.

Um Speicherplatz zu sparen, werden vorliegend als Referenzen keine Zeiger verwendet, die beispielsweise jeweils 4 Byte Speicherplatz benötigen würden, sondern Offsets in den verwalteten Speicherbereich (Heap), die dann nur jeweils 2 Bytes Speicherplatz benötigen.

Die in Figur 4 dargestellte Speicherverwendung ist in zwei weiteren Punkten noch nicht optimiert.

Erstens könnte man die Reihenfolge der Referenzen 125,126 vertauschen, d.h. die Nachfolger-Referenz 126 würde vor der Vorgänger-Referenz 125 stehen. So wäre auch für das letzte Element, welches keinen Nachfolger mehr hat, gewährleistet, dass die Positionen der Referenzen stets definiert sind und dass eine fehlende Nachfolger-Referenz einfach hinter der vorhandenen Vorgänger-Referenz ergänzt werden kann.

Zweitens wird ein freizugebender Freispeicherblock bevorzugt immer gleich mit einem unmittelbar angrenzenden Freispeicherblock vereinigt. Die Figur zeigt dagegen zwei unmittelbar benachbarte Freispeicherbereichblöcke FSB#1 und FSB#2. Beispielsweise bei Freigabe des Freispeicherbereichblockes FSB#2 würde dieser Block mit dem Freispeicherbereichblöcke FSB#1 vereinigt werden. Es entsteht durch diesen Schritt zwar zunächst ein zusätzlicher Verwaltungsaufwand, aber als Vorteil entsteht sofort (ohne separate Defragmentierung) ein größerer Freispeicherblock. Diese Wirkung ist wichtig, da die grundlegende Strategie zur Zuteilung freier Speicherblöcke der "best fit"-Algorithmus ist. Es wird also immer einer der kleinsten verfügbare Blöcke zugeteilt, welcher die angeforderte Speichergröße gerade noch aufnehmen kann. Die Kombination aus sofortiger Vereinigung unmittelbar angrenzender Freispeicherblöcke und dem Best-Fit-Algorithmus bildet eine gute Strategie um eine Fragmentierung des Speichers gering zu halten.

Das insgesamt vorstehend beschriebene Verfahren zur Speicherverwaltung von flüchtigen Speicherressourcen 50 des Datenträgers 10 hat somit den Vorteil, dass zur Verwaltung der Freispeicherblöcke 310 selbst nur sehr wenig Speicherressourcen 50 benötigt werden, welche ihrerseits auch nur solange benötigt werden, wie noch zuteilbarer Speicher vorhanden ist. Da vorzugsweise mittels Referenzen auf physikalische Speicheradressen operiert wird, wird keine zusätzliche Speicherverwaltungseinheit ("memory management unit", MMU) benötigt, welche physikalische in virtuelle Adressen umrechnet. Auch auf diese Weise werden Ressourcen (Rechenzeit und Speicher) gespart und das Verfahren ist Plattform übergreifend anwendbar. Aufgrund der Verwendung der Baumstruktur 100 ist das Verfahren sehr schnell, d.h. die Speicherzuteilung kann sehr schnell erfolgen. Deshalb eignet sich das Verfahren insbesondere zum Einsatz in zeitkritischen Interrupt-Service-Routinen. Da sowohl die Baumstruktur 100 als auch die Listenstrukturen 120, 200 ohne großen Aufwand aktualisiert werden können, eignet sich das Verfahren insbesondere für die Verwaltung eines dynamisch wachsenden oder schrumpfenden Heaps 300.

## Patentansprüche

1. Verfahren in einem portablen Datenträger (10) zum dynamischen Verwalten von flüchtigen Speicherressourcen (50) des Datenträgers (10), **dadurch gekennzeichnet, dass** Freispeicherblöcke (310) der Speicherressourcen (50) mittels einer Baumstruktur (100) verwaltet werden und mit dem Verwalten der Freispeicherblöcke (310) in Zusammenhang stehende Speicherverwaltungsdaten (152; 154; 156; 124; 125; 126) zumindest teilweise in den Freispeicherblöcken (310) gespeichert werden.

2. Verfahren nach Anspruch 1, **dadurch gekennzeichnet, dass** die Freispeicherblöcke (310) jeweils Klassen zugeordnet werden, wobei derselben Klasse zugeordnete Freispeicherblöcke (310) jeweils mittels einer Listenstruktur (120) verwaltet werden und wobei jeder Knoten (130; 132; 134; 136; 138; 139; 140; 141) der Baumstruktur (100) mit genau einer der Klassen verknüpft wird, indem der Knoten (130) mit der die Freispeicherblöcke (310) der Klasse verwaltenden Listenstruktur (120) verknüpft wird.

3. Verfahren nach Anspruch 2, **dadurch gekennzeichnet, dass** solche Freispeicherblöcke (310), die im Wesentlichen die gleiche Größe (170) aufweisen, derselben Klasse zugeordnet werden.

4. Verfahren nach Anspruch 2 oder 3, **dadurch gekennzeichnet, dass** die Listenstruktur (120) als doppelt verkettete Liste ausgebildet wird.

5. Verfahren nach einem der Ansprüche 1 bis 4, **dadurch gekennzeichnet, dass** in einem Freispeicherblock (310; FSB #1) als Speicherverwaltungsdaten (152,154,156,124,125,126) Referenzen (152; 154; 156) auf Nachbarknoten (132; 134; 136) in der Baumstruktur (100) gespeichert werden.

6. Verfahren nach einem der Ansprüche 2 bis 5, **dadurch gekennzeichnet, dass** die in einem Freispeicherblock (310; FSB #1; FSB #2) als Speicherverwaltungsdaten (152; 154; 156; 124; 125; 126) Referenzen (124; 125; 126) auf einen Vorgänger (121) und/oder Nachfolger (122; 123) in der jeweiligen Listenstruktur (120) gespeichert werden.

7. Verfahren nach Anspruch 5 und 6, **dadurch gekennzeichnet, dass** jeweils in lediglich einem Freispeicherblock (310; FSB #1) einer die Freispeicherblöcke (310) einer Klasse verwaltenden Listenstruktur (120) Speicherverwaltungsdaten (152; 154; 156) bezüglich der Baumstruktur (100) gespeichert werden.

8. Verfahren nach einem der Ansprüche 1 bis 7, **dadurch gekennzeichnet, dass** die Baumstruktur (100) als balancierter binärer Baum ausgebildet wird.

9. Verfahren nach Anspruch 8, **dadurch gekennzeichnet, dass** die Baumstruktur (100) als selbstbalancierender Baum, insbesondere als AVL-Baum oder als Rot-Schwarz-Baum oder als Splay-Baum, ausgebildet wird.

10. Verfahren nach einem der Ansprüche 1 bis 9, **dadurch gekennzeichnet, dass** ein Freispeicherblock (310) durch eine Anfangsmarkierung (320) und eine Endmarkierung (330) definiert wird, welche jeweils Informationen über Größe (170) und Verfügbarkeit (172) des Freispeicherblocks (310) umfassen.

11. Verfahren nach einem der Ansprüche 1 bis 10, **dadurch gekennzeichnet, dass** Freispeicherblöcke, welche eine vorgegebene Größe unterschreiten, einer Sonderklasse zugeordnet werden und mittels einer von der Baumstruktur (100) verschiedenen Verwaltungsstruktur (200) verwaltet werden.

12. Verfahren nach einem der Ansprüche 1 bis 11, **dadurch gekennzeichnet, dass** beim Zuteilen eines Freispeicherblocks (310) als Freispeicher an einen auf dem Datenträger (10) ausgeführten Prozess der gesamte Freispeicherblock (310) einschließlich eines von den Speicherverwaltungsdaten (152; 154; 156; 124) belegten Bereichs (311) des Freispeicherblocks (310) dem Prozess als Freispeicher zur Verfügung gestellt wird.

13. Portabler Datenträger (10), umfassend einen Prozessor (30) und eine auf dem Prozessor (30) ausführbare Speicherverwaltungsapplikation (62) zum dynamischen Verwalten von flüchtigen Speicherressourcen (50) des Datenträgers (10), **dadurch gekennzeichnet, dass** die Speicherverwaltungsapplikation (62) eingerichtet ist, Freispeicherblöcke (310) der Speicherressourcen (50) mittels einer Baumstruktur (100) zu verwalten und mit der Verwaltung der Freispeicherblöcke (310) in Zusammenhang stehende Speicherverwaltungsdaten (152; 154; 156; 124; 125; 126) zumindest teilweise in den Freispeicherblöcken (310) zu speichern.

14. Datenträger (10) nach Anspruch 13, **dadurch gekennzeichnet, dass** die Speicherverwaltungsapplikation (62) eingerichtet ist, ein Verfahren nach einem der Ansprüche 1 bis 12 auszuführen.
